# FASCICULE DE BREVET EUROPEEN

(11) **EP 2 286 192 B1**
(45) Date de publication et mention de la délivrance du brevet: **26.02.2020**
(21) Numéro de dépôt: 09749997.4
(22) Date de dépôt: 24.04.2009
(51) Int. Cl.: G01G 3/16, G01G 3/13

(54) **DISPOSITIF POUR LA DÉTECTION GRAVIMÉTRIQUE DE PARTICULES EN MILIEU FLUIDE, MÉTHODE DE DÉTECTION GRAVIMÉTRIQUE, MÉTHODE DE DÉTERMINATION DE CINÉTIQUE D'INTERACTION**
EINRICHTUNG ZUR GRAVIMETRISCHEN DETEKTION VON TEILCHEN IN EINEM FLUIDEN MEDIUM, VERFAHREN ZUR GRAVIMETRISCHEN DETEKTION, VERFAHREN ZUR BESTIMMUNG DER KINETIK DER WECHSELWIRKUNG
DEVICE FOR THE GRAVIMETRIC DETECTION OF PARTICLES IN A FLUID MEDIUM, METHOD OF GRAVIMETRIC DETECTION, METHOD OF DETERMINATION OF KINETIC OF INTERACTION

(30) Priorité: 20.05.2008 FR 0802743
(43) Date de publication de la demande: 23.02.2011
(73) Titulaire: Commissariat à l'Énergie Atomique et aux Énergies Alternatives, 75015 Paris (FR)
(72) Inventeur: AGACHE, Vincent, F-38950 St Martin Le Vinoux (FR)
(74) Mandataire: Gevers & Orès
(86) Numéro de dépôt international: PCT/FR2009/000487
(87) Numéro de publication internationale: WO 2009/141516

(56) Documents cités:
- EP-A- 1 059 521
- WO-A-00/20850
- WO-A1-2007/148522
- US-A- 5 306 644
- US-A- 5 349 844
- US-A- 5 744 902
- US-A- 5 920 007
- US-A1- 2004 016 297
- US-A1- 2007 119 232

## Description

La présente invention concerne le domaine technique de la détection gravimétrique en milieu fluide (liquide, gazeux) à partir de structures résonantes de types NEMS/MEMS (Nano Electro Mechanical System/Micro Electro Mechanical System).

Cette détection gravimétrique repose, de façon générale, sur la détection de variations de la fréquence de vibration d'un oscillateur électromécanique lorsqu'une molécule se dépose à sa surface.

Tout oscillateur soumis à une force de vibration entre lui-même en vibration. A certaines fréquences, propres à chaque oscillateur, l'amplitude de vibration est maximale. Ces fréquences sont appelées « fréquences de résonance ». Ainsi, soumettre un oscillateur à une vibration de fréquence égale à l'une de ses fréquences de résonance permet de détecter le dépôt d'une particule sur l'oscillateur. En effet, ce dépôt modifie la fréquence de vibration de l'oscillateur qui ne vibre donc plus à une fréquence de résonance. L'amplitude de vibration est alors réduite et peut être détectée facilement. La différence minimale d'amplitude pouvant être détectée détermine la résolution du dispositif de détection, c'est-à-dire le poids minimal détectable d'une particule se déposant sur l'oscillateur.

Cette méthode peut être utilisée pour :
- détecter la présence d'une molécule,
- détecter la masse de la molécule,
- caractériser la cinétique d'association/dissociation d'une molécule avec un élément de reconnaissance moléculaire complémentaire (anticorps, sondes d'acides nucléiques ou encore polymère imprimé) greffé préalablement à dessein sur la surface dudit oscillateur.

Cette invention concerne donc le domaine des méthodes de détection directe, sans marquage des événements biologiques ou chimiques.

De nombreux documents décrivent des capteurs à détection gravimétrique à base d'oscillateurs NEMS/MEMS.

On peut ainsi citer des travaux dans lesquels a été utilisé un capteur de masse sous la forme d'une poutre bi-encastrée en carbure de silicium, mise en vibration par transduction magnétostatique.

Dans l'ensemble de la description, on entendra par poutre, une pièce allongée, sensiblement horizontale, dont l'épaisseur et la largeur sont du même ordre de grandeur (ratio compris entre environ 0,8 et 1,2), lesquelles sont relativement faibles par rapport à la longueur de la poutre.

Ce capteur a permis de détecter et de peser des atomes de Xénon, déposés sous vide élevé (10⁻¹⁰Torr) et à très basse température (4,2°K), à la surface du capteur. Un tel capteur présente une résolution de l'ordre de sept zeptogrammes (zg) et une sensibilité massique de l'ordre de 0,96 Hz/zg.

Les conditions très contraignantes de fonctionnement de ce capteur rendent difficile, voire impossible, son exploitation à des fins biologiques car la transduction magnétostatique est faible en milieu aqueux et le vide poussé est incompatible avec des mesures *in vivo.*

On connaît également quelques travaux concernant la détection gravimétrique avec des oscillateurs électromécaniques opérant en milieu aqueux. On peut ainsi citer l'article de T. Adrega et al., "Resonance of electrostatically actuated thin-film amorphous silicon microelectromechanical systems microresonators in aqueous solutions: Effect of solution conductivity and viscosity", J. Appl. Phys. 2007, 101, 094308. Cet article décrit une poutre bi-encastrée mise en vibration hors-plan, et dont la fréquence de résonance est mesurée par le biais d'une détection optique. Le facteur de qualité d'une telle structure est relativement faible puisqu'il est de l'ordre de 3, compte tenu du volume de liquide qui est déplacé par la structure mise en mouvement et de la sollicitation mécanique importante des points d'ancrage. Par ailleurs, cette structure est encombrante car la poutre bi-encastrée se présente sous la forme d'un pont sous lequel est disposée une électrode d'actionnement. Cet encombrement est encore augmenté par la présence des moyens de détection, en l'occurrence, une source laser et une photodiode.

On citera encore des travaux concernant la mise en œuvre d'un oscillateur électromécanique de type poutre en porte-à-faux. Les résultats de ces travaux sont expliqués en détail dans l'article de J. Teva et al., "A femtogram resolution mass sensor platform based on SOI electrostatically driven resonant cantilever. Part II: Sensor calibration and glycerine evaporation rate measurement", Ultramicroscopy 2006, 106, 808-814. Une microgoutte de glycérine est déposée avec précision sur cet oscillateur, puis des mesures de fréquence de résonance sont effectuées pour suivre la vitesse d'évaporation de la goutte. Cette méthode qui consiste à extraire une variation de masse à partir d'une mesure de fréquence, nécessite une étape de calibrage préalable de la sensibilité massique à partir de billes en latex.

On ne peut pas considérer que l'oscillateur est placé dans un milieu liquide lors de la mesure, puisque seule une goutte est déposée à l'extrémité de l'oscillateur, le reste du détecteur étant maintenu en milieu sec. L'utilisation du dispositif décrit dans cet article de Teva n'a donc jamais été validée en milieu aqueux. L'utilisation d'un tel oscillateur à des fins biologiques n'est donc pas envisageable car il est nécessaire, dans ce cas, d'extraire une cinétique de réaction en temps réel et donc, en général, en milieu aqueux.

On peut enfin citer d'autres travaux qui ont consisté à intégrer une solution biologique à analyser au sein même de l'oscillateur. Ces travaux sont expliqués en détails dans l'article de S. Manalis et al., "Weighing of biomolecules, single cells and single nanoparticles in fluid", Nature 446, Apr 26 2007, (7139): 1066-1069.

L'oscillateur se présente sous la forme d'une poutre en porte-à-faux dans laquelle est prévue une veine fluidique isolée de manière étanche du milieu dans lequel l'oscillateur, dont elle fait partie, est actionné. Cet oscillateur est mis en vibration par couplage électrostatique à 220 kHz et sous un vide poussé, tandis que la solution biologique à analyser circule au sein de la veine fluidique intégrée. Dans cette configuration, un facteur de qualité de 15000 est obtenu, et reste invariable selon que les canaux soient remplis d'air ou de liquide. Ces travaux ont permis de suivre la cinétique de réaction d'une reconnaissance anticorps-antigènes, pour une concentration en antigènes de de 100 ng.ml⁻¹, ce qui place ce type de dispositif au même rang que les meilleures balances à quartz en termes de résolution.

Ces travaux présentent cependant des limites, résidant notamment dans la méthode de détection employée. En effet, elle met en œuvre une détection optique à l'aide d'un laser et d'une photodiode externe, lesquels contribuent à l'encombrement global du système.

On peut encore citer les documents suivants : US5744902A, EP1059521A, WO00/20850A, US5306644A, US2007/119232A1, WO2007/148522A1, US5920007A, US5349844A et US2004/016297A1 qui divulguent différents types de dispositifs pour la détection gravimétrique en milieu fluide.

Tous ces dispositifs présentent cependant un encombrement plus ou moins important et un facteur de qualité limité.

Il résulte de cette présentation qu'il n'existe à ce jour aucun dispositif pour la détection gravimétrique mettant en œuvre un oscillateur NEMS/MEMS économique, permettant une détection de particules en milieu liquide, dans des conditions compatibles avec des analyses biologiques, présentant un facteur de qualité élevé et un encombrement réduit.

L'invention a pour objet de pallier ces inconvénients en proposant un dispositif pour la détection gravimétrique de particules en milieu fluide assurant à la fois un facteur de qualité important, des conditions d'utilisation facilitées, un encombrement réduit et un coût de production faible.

L'invention a pour objet de pallier ces inconvénients en proposant un dispositif pour la détection gravimétrique de particules en milieu fluide assurant à la fois un facteur de qualité important, des conditions d'utilisation facilitées, un encombrement réduit et un coût de production faible. Ce dispositif peut, notamment, être utilisé pour la formation d'un diagnostic au chevet même du malade, le suivi en temps réel de paramètres physiologiques dans le cas d'une implantation in-vivo (par exemple : dosage de l'hémoglobine glycosylée HbA1c pour le traitement du diabète et prévenir ou stopper l'évolution des complications oculaires, rénales et neurologiques), ou pour la détection d'espèces toxiques et pathogènes dans l'air ou dans l'eau.

A cette fin, l'invention a pour objet un dispositif pour la détection gravimétrique de particules en milieu fluide selon la revendication 1.

Dans l'ensemble de la description, on entendra par oscillateur plan, une plaque présentant une longueur et une largeur importantes par rapport à son épaisseur (ratio supérieur à 2), la longueur et la largeur étant du même ordre de grandeur préférentiellement.

Selon d'autres caractéristiques de l'invention :
- les moyens de support peuvent se présenter sous la forme de pièces massives, telles que des pavés ;
- à chaque sommet de l'oscillateur électromécanique, les moyens de support peuvent comprendre une fourche comprenant un manche et deux dents, orientés dans le prolongement d'une diagonale de l'oscillateur électromécanique passant par ledit sommet, les dents étant reliées à une pièce massive ;
- à chaque sommet de l'oscillateur électromécanique, les moyens de support peuvent comprendre une poutre orientée dans le prolongement d'une diagonale de l'oscillateur électromécanique passant par ledit sommet, la poutre étant reliée à une pièce massive ;
- ledit oscillateur électromécanique peut être obtenu à partir d'un substrat métallique ;
- ledit oscillateur électromécanique peut être obtenu à partir d'un substrat polycristallin ;
- ledit oscillateur électromécanique peut être obtenu à partir d'un substrat monocristallin ;
- le substrat peut être à base de silicium ;
- ledit substrat monocristallin peut être orienté selon le plan cristallographique (100) ou, alternativement, selon le plan cristallographique (110) ;
- ladite cavité traversante de l'oscillateur peut être au moins partiellement recouverte par des éléments de reconnaissance moléculaire ; et/ou
- ladite cavité traversante de l'oscillateur et/ou le canal peu(ven)t contenir des piliers dont la section transversale est de forme prise parmi un cercle, une ellipse, et un polygone.

Ce dispositif peut, notamment, être utilisé pour la formation d'un diagnostic au chevet même du malade, le suivi en temps réel de paramètres physiologiques dans le cas d'une implantation in-vivo (par exemple : dosage de l'hémoglobine glycosylée HbA1c pour le traitement du diabète et prévenir ou stopper l'évolution des complications oculaires, rénales et neurologiques), ou pour la détection d'espèces toxiques et pathogènes dans l'air ou dans l'eau.

L'invention se rapporte également à une méthode de détection gravimétrique de particules en milieu fluide, mise en œuvre avec un dispositif selon l'invention, comprenant les étapes suivantes :
a) générer un flux de fluide pour amener du fluide au contact de l'oscillateur ; dans la cavité traversante ;
b) mettre en vibration l'oscillateur à une fréquence initiale et selon un mode vibratoire déterminé, ledit mode vibratoire étant pris dans le groupe constitué par le mode vibratoire de Lamé et le mode vibratoire d'extension volumique ;
c) détecter la fréquence de vibration de l'oscillateur ;
d) détecter une modification de la fréquence par rapport à la fréquence de vibration initiale de l'oscillateur.

Par convention, les étapes de ce procédé sont faites dans l'ordre alphabétique.

Selon d'autres caractéristiques de l'invention :
- la méthode de détection gravimétrique peut comprendre une étape e) de récupération et de traitement de données de détection générées aux étapes c) et d) ;
- la fréquence de vibration initiale peut être une fréquence de résonance de l'oscillateur ;
- la mise en vibration de l'oscillateur prévue à l'étape b), étant précédée d'une étape b1) dans laquelle au moins deux électrodes consécutives sont alimentées en champ sinusoïdal en opposition de phase et à une fréquence déterminée caractéristique des particules à détecter ;
- l'étape b1) peut être précédée d'une étape b0) dans laquelle le flux de fluide est arrêté ;
- la méthode de détection gravimétrique peut comprendre une étape a0) préalable à l'étape a), dans laquelle la surface de la cavité ménagée dans l'oscillateur est recouverte au moins partiellement par des éléments de reconnaissance moléculaire.

L'invention se rapporte également à une méthode de détermination de cinétique d'interaction entre une molécule et un élément de reconnaissance moléculaire complémentaire, utilisant la méthode de détection gravimétrique selon l'invention, et comprenant une étape d') de détection d'une nouvelle modification de la fréquence correspondant à un retour à la valeur de la fréquence de résonance de l'oscillateur, cette étape d') étant réalisée après l'étape d).

Les modes particuliers de réalisation de l'invention sont définis dans les revendications dépendantes.

Dans la description, certains exemples présentés en tant que "modes de réalisation" ne font pas forcément partie de l'invention, qui est définie par les revendications.

D'autres caractéristiques de l'invention seront énoncées dans la description détaillée ci-après faite en référence aux figures qui représentent, respectivement :
- la figure 1, une vue schématique en perspective d'une partie inférieure d'une fraction d'un détecteur gravimétrique selon l'invention ;
- la figure 2, une vue schématique en perspective du détecteur de la figure 1 et complété en partie ;
- la figure 3, une vue schématique en plan d'un détecteur selon l'invention muni de moyens de suspension de l'oscillateur selon un premier mode de réalisation ;
- la figure 4, une vue schématique en perspective d'un détecteur selon l'invention muni de moyens de suspension de l'oscillateur selon un deuxième mode de réalisation ;
- les figures 5 à 11, des vues schématiques de substrats pour un mode de fabrication préféré d'un détecteur selon l'invention à différentes étapes de la réalisation ;
- la figure 12, une représentation schématique de la commande des électrodes pour la mise en œuvre d'une méthode de détection gravimétrique selon l'invention ; et
- la figure 13, une vue schématique en perspective d'un détecteur selon l'invention muni de piliers.

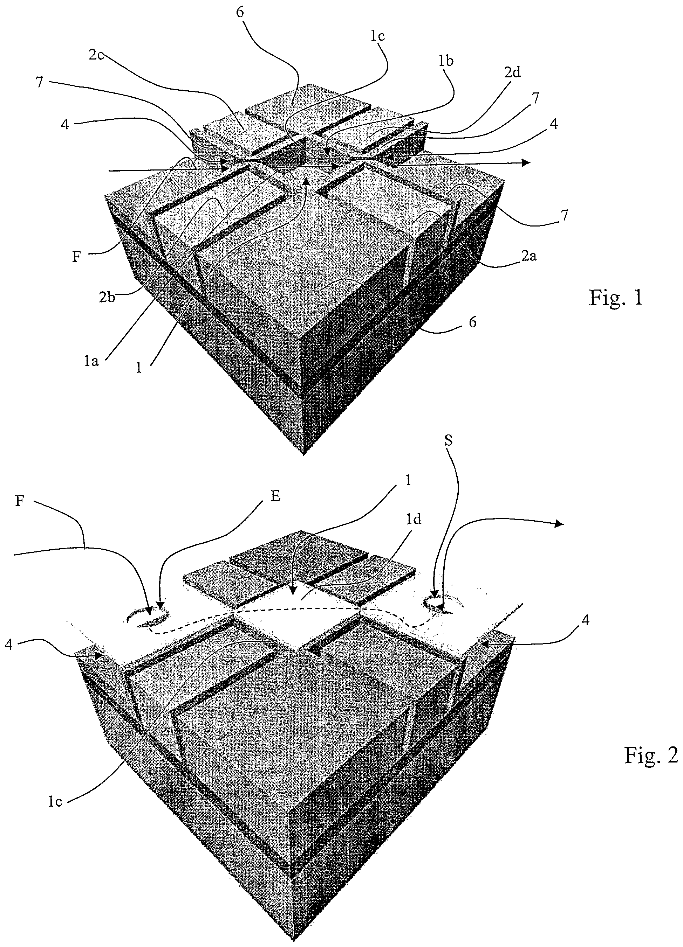

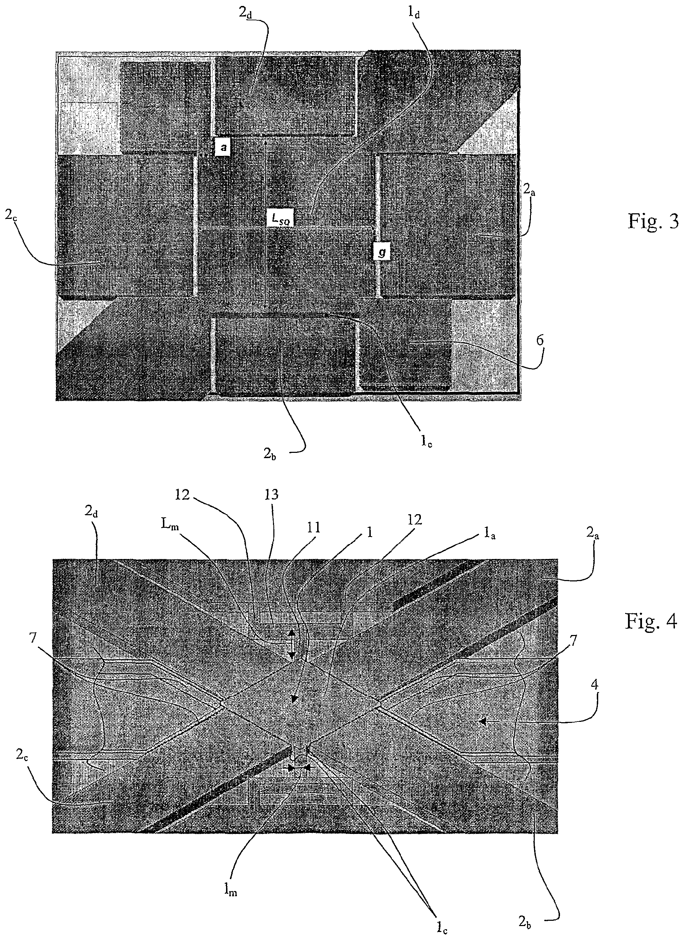

Un dispositif de détection gravimétrique selon l'invention, représenté en figure 1, comprend un oscillateur électromécanique plan 1 comportant un fond 1a carré et des flancs 1c définissant une cavité traversante 1b. En regard de chacun des flancs, et à une distance g déterminée (voir figure 3), une électrode 2a, 2b, 2c et 2d est disposée dans le même plan que l'oscillateur. Dans l'ensemble de la demande, on entend par une disposition dans le même plan, le fait que les électrodes sont en regard des flancs de l'oscillateur, parallèles à son fond et sensiblement de même épaisseur. D'autre part, la distance g doit être aussi petite que possible, sa valeur étant limitée principalement par la résolution des outils de lithographie ainsi que par l'épaisseur T_{SQ} de la plaque 1 (typiquement g est de l'ordre de T_{SQ}/10 et supérieur à 100nm).

En référence à la figure 2, est illustrée la paroi 1d, opposée au fond 1a.

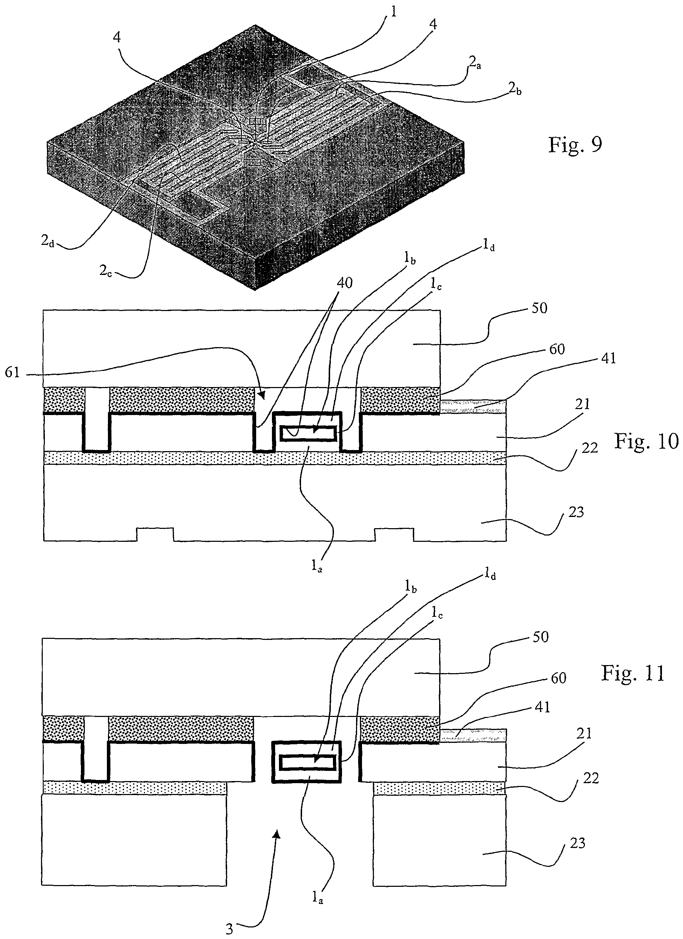

En outre, l'oscillateur 1 est supporté par des moyens de support au-dessus d'une ouverture 3 (voir figure 11) de telle sorte qu'il puisse entrer en vibration, de préférence à sa fréquence de résonance (selon un mode de lamé, ou d'extension volumique par exemple), sensiblement dans son plan, par couplage électrostatique par l'intermédiaire des électrodes. Ce faisant, le détecteur gravimétrique selon l'invention présente un coefficient de qualité élevé puisque le volume de fluide déplacé est localisé à l'intérieur de la cavité traversante de l'oscillateur.

Cette mise en vibration est rendue possible non seulement par l'ouverture 3 mais également par une ouverture 61 (figure 10) ménagée au-dessus de l'oscillateur et par les distances g séparant l'oscillateur des électrodes.

Le dispositif comporte en outre, un canal 4 de passage d'un fluide agencé pour être en communication fluidique avec la cavité traversante 1b de l'oscillateur 1. Ainsi, comme illustré par la flèche F en figure 2, le fluide entre dans le dispositif par une entrée fluidique E, traverse la cavité de l'oscillateur puis ressort du dispositif par la sortie fluidique S.

Ainsi, le fluide analysé par le dispositif est isolé de manière étanche de l'environnement dans lequel l'oscillateur est actionné et qui est, préférentiellement, un milieu sec.

Selon un mode préféré de réalisation, l'oscillateur électromécanique plan se présente sous la forme d'une plaque avec une largeur L_{sq} et une épaisseur T_{sq} telle que le rapport L_{sq} / T_{sq} de la largeur sur l'épaisseur est compris entre 10 et 30, de préférence 10. De cette manière, la plaque présente un comportement vibratoire différent d'une membrane.

Dans un mode préféré de réalisation, les moyens de support sont répartis aux quatre sommets de l'oscillateur. Ils peuvent se présenter sous la forme de pièces massives telles que des pavés 6 et des paires de bras 7, comme illustré sur la figure 1. Sur cette figure, on voit que les deux pièces 6 et respectivement les deux paires de bras 7 sont dans le prolongement des diagonales de l'oscillateur 1. Lesdites paires de bras sont usinées de sorte à permettre la circulation de fluide au sein de la cavité 1b traversant l'oscillateur 1. Alternativement, les moyens de support peuvent se limiter à deux paires de bras 7 qui peuvent être disposées de façon diamétralement opposée dans le prolongement des diagonales de l'oscillateur 1, ou disposées à deux sommets adjacents de ce dernier. Enfin, une dernière configuration consiste à n'utiliser qu'un seul pavé 6 et deux paires de bras 7 comme moyens de support.

Comme illustré sur la figure 4, les moyens de support peuvent également se présenter sous la forme de paires de bras 7 et de fourches 10 comprenant un manche 11 et deux dents 12, les bras et les fourches étant dans le prolongement des diagonales de l'oscillateur et les dents de la fourche étant reliées à une pièce massive 13.

La longueur Lₘ du manche 11 de la fourche est choisie de telle sorte que le manche puisse vibrer de préférence en extension longitudinale, alternativement en flexion latérale, lorsque l'oscillateur vibre, de préférence à une fréquence de résonance de l'oscillateur (mode de Lamé, mode d'extension volumique, ou « verre à vin » s'il s'agit d'un anneau ou d'un disque par exemple).

Par ailleurs, la largeur lₘ du manche équivaut à L_{sq}/10, où L_{sq} désigne la largeur de l'oscillateur 1. La largeur "a" de contact entre les pavés 6 ou les bras 7 et l'oscillateur 1 est choisie, quant à elle, pour que ces moyens de support soutiennent solidement l'oscillateur, tout en altérant le moins possible la vibration de l'oscillateur selon les modes vibratoires souhaités. Pour ce faire, les règles de dimensionnement respectent la condition suivante: a≤L_{sq}/10.

Les moyens d'actionnement sont mis en œuvre et agencés par rapport à l'oscillateur pour que celui-ci puisse entrer en vibration, dans son plan, selon un mode de vibration déterminé. Selon la manière dont sont activés les moyens d'actionnement, l'oscillateur peut vibrer selon différents modes, tels que le mode de Lamé, le mode d'extension volumique ou, selon le mode dit « du verre à vin » (en particulier pour un oscillateur circulaire ou annulaire).

L'oscillateur 1 peut être mis en vibration, dans son plan, par couplage électrostatique, par l'intermédiaire d'au moins une des quatre électrodes 2a à 2d, ou, dans un mode préféré, de deux électrodes adjacentes.

L'oscillateur 1 peut également être mis en vibration hors de son plan et selon un mode de flexion. Cependant, une telle mise en œuvre diminuera le facteur de qualité de l'oscillateur.

Afin de miniaturiser les différents éléments du dispositif de détection gravimétrique, il est souhaitable de les réaliser à l'aide de techniques de micro ou nanostructuration d'un substrat pouvant être constitué soit d'une couche de polysilicium déposé sur un oxyde thermique, soit d'un substrat de SOI (Silicon On Isolator). Ce dernier substrat est constitué de deux couches de silicium monocristallin entre lesquelles est disposée une couche de dioxyde de silicium (SiO₂).

Dans la suite de la présente description, les exemples de réalisation seront décrits pour un dispositif de détection gravimétrique usiné sur des substrats SOI d'orientation cristallographique (100). Alternativement, les substrats SOI utilisés peuvent être orientés selon le plan cristallographique (110). L'un des avantages de cette technologie repose sur la plus faible sujétion aux mécanismes de dissipation mécanique que celle des matériaux polycristallins (par exemple le polysilicum) dans lesquels sont souvent observés des phénomènes de relaxation des joints de grain.

Ainsi, lorsque qu'un substrat SOI est utilisé, l'oscillateur illustré en figure 4 est fabriqué pour que les flancs 1c de la plaque et les électrodes 2a à 2d présentent une orientation cristallographique dans la direction <110>. Les flancs d'un manche et des deux dents de chaque fourche des moyens de suspension présentent, alors, une orientation cristallographique dans la direction <100>.

La réalisation d'un dispositif de détection gravimétrique selon l'invention comprend, d'une manière générale, les étapes suivantes :
- sélection d'un substrat approprié à la détection gravimétrique envisagée,
- réalisation à partir dudit substrat d'un oscillateur électromécanique plan, et suspendu entre deux ouvertures,
- réalisation d'une cavité traversante dans l'oscillateur, et
- réalisation d'un canal pour le passage du fluide, le canal étant en communication fluidique avec la cavité traversante ménagée dans l'oscillateur.

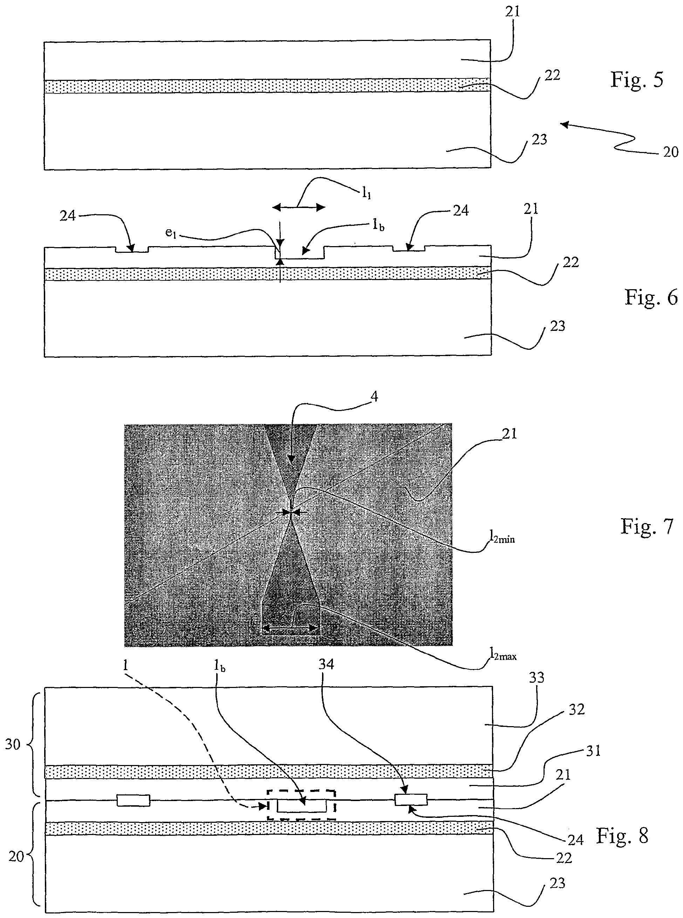

Un mode de réalisation d'un dispositif selon l'invention est illustré dans les figures 5 à 12.

Pour une détection gravimétrique de masse à l'échelle du kilo-dalton (kDa), voire en dessous de cette échelle, un substrat approprié peut être un substrat de silicium SOI. Selon le mode de réalisation décrit, le procédé de fabrication consiste à réaliser l'oscillateur en deux parties, à savoir une première partie réalisée sur un premier substrat de SOI 20 et une deuxième partie réalisée par un deuxième substrat de SOI 30 scellé sur le premier substrat. Par ailleurs, les autres composants (moyens de support, ouverture, électrodes, canal) du dispositif de détection gravimétrique sont également structurés sur ces substrats 20-30 de SOI.

Plus précisément, le premier substrat de SOI 20, illustré en figure 5, comprend une couche 21 de silicium monocristallin, qui peut être fortement dopé (la concentration des porteurs de charge pouvant être supérieure à 5.10¹⁸ atomes par cm³), de type P ou N, d'une épaisseur comprise entre 1 et 5µm, et plus particulièrement 3µm dans un mode préféré de réalisation. Sous cette couche 21, est disposée une couche 22 de dioxyde de silicium isolant (SiO₂) enterrée, d'une épaisseur d'environ 1 à 3 µm. Sous cette couche 22, est disposée une couche 23 de silicium monocristallin, à haute résistivité (p >1000 ohm.cm), dans un mode préféré de réalisation, et orientée selon le plan cristallographique (100). Cette couche 23 présente une épaisseur d'environ 725 µm.

Dans une première étape facultative, illustrée en figure 6, des marques d'alignement 24 peuvent être réalisées sur la surface extérieure de la couche 21. Ces marques permettront un alignement plus précis des deux substrats 20 et 30 lors de la deuxième étape.

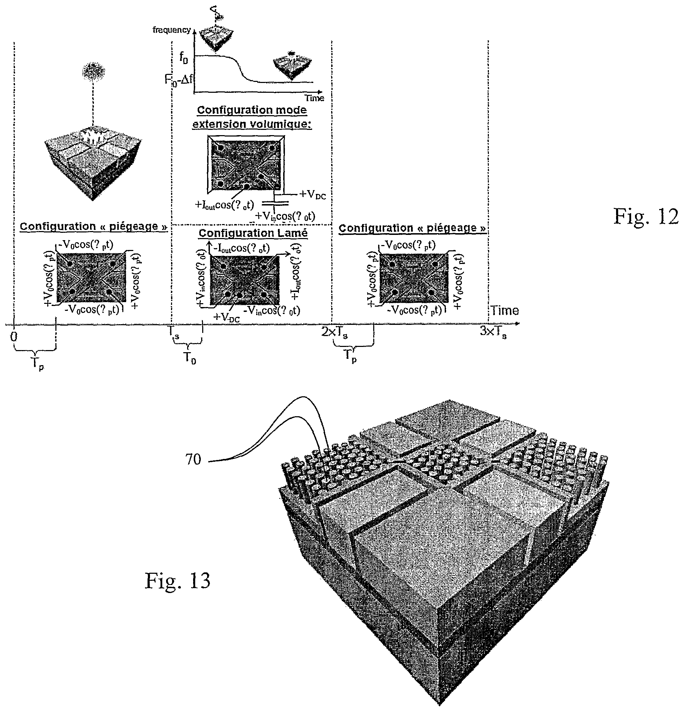

Dans une deuxième étape, la cavité traversante 1b de l'oscillateur 1 est gravée dans la couche supérieure 21 de silicium dopé du substrat SOI 20. Cette cavité 1b présente, de préférence, une profondeur e₁ de 1,5µm et une largeur l₁ de 3µm. Dans un mode de réalisation particulier, ladite cavité peut inclure des piliers 70 (voir figure 13), espacés entre eux à intervalle régulier ou non, selon leur position dans la cavité traversante. Le canal 4 de circulation du fluide est également structuré dans la couche supérieure 21 de silicium dopé, en communication fluidique avec la cavité 1b du futur oscillateur. De préférence, comme illustré en figure 7, le canal présente une largeur l₂ₘₐₓ maximale d'environ 110 µm, cette largeur diminuant progressivement jusqu'à atteindre une largeur minimale l₂ₘᵢₙ égale à la largeur l₁ de la cavité, c'est-à-dire, dans le mode de réalisation illustré, 3µm. Ce canal 4 peut également contenir des piliers.

Lesdits piliers peuvent être disposés en amont et/ou en aval de la cavité 1b usinée dans l'oscillateur (c'est-à-dire avant et/ou après le passage des bras 7 indiqués en figure 1). En amont de l'oscillateur, ils peuvent servir à capturer les molécules qui ne sont pas d'intérêt et qui sont amenées par l'entrée fluidique E. Pour cela, l'espacement entre ces piliers est ajusté de sorte à laisser circuler de l'entrée E à la sortie S les molécules d'intérêt mais pas les autres molécules. Disposer des piliers en aval de l'oscillateur permet d'intervertir le sens de circulation du fluide et, ainsi de faciliter l'utilisation du dispositif de détection selon l'invention qui ne dépend pas du sens d'écoulement du fluide.

Lorsque les piliers sont intégrés dans l'oscillateur, ils servent à supporter et à renforcer la paroi 1d recouvrant la cavité 1b ménagée au sein de l'oscillateur. Ils servent également à augmenter l'aire de capture disponible pour le greffage des objets biologiques d'intérêt, afin d'accroître la probabilité de capture et la sensibilité du capteur.

Les piliers ont une section transversale de forme circulaire, elliptique ou polygonale.

Le second substrat de SOI 30, illustrée en figure 8, comprend une couche 31 de silicium monocristallin qui peut être fortement dopé (la concentration des porteurs de charge pouvant être supérieure à 5.10¹⁸ atomes par cm³), de type P ou N, d'une épaisseur comprise entre 100 et 340 nm, et plus particulièrement 160 nm dans un mode préféré de réalisation. Sur cette couche 31 est disposée une couche 32 de dioxyde de silicium isolant (SiO₂) enterrée, d'une épaisseur d'environ 1 à 3 µm. Sur cette couche 32, est disposée une couche 33 de silicium monocristallin, à haute résistivité (p >1000 ohm.cm) dans un mode préféré de réalisation, et orientée selon le plan cristallographique (100). Cette couche 33 présente une épaisseur d'environ 725 µm.

Le substrat SOI 30 peut être lui aussi structuré afin d'y définir des marques d'alignement 34 sur la surface extérieure de sa couche 31, ainsi que des ouvertures E et S (voir figure 2) pour permettre d'accéder au canal 4 de circulation du fluide usiné dans la couche supérieure 21 du substrat 20, une fois que les deux substrats seront assemblés. Le deuxième substrat 30 a également été structuré en vue des étapes de lithographie ultérieures nécessaires à la réalisation dans le dispositif final des électrodes, des moyens de support et de l'oscillateur et, plus particulièrement, leur alignement par rapport au canal 4 de circulation du fluide usiné dans la couche supérieure 21 du substrat 20.

Dans une troisième étape, illustrée en figure 8, le second substrat de SOI 30 est aligné, déposé et scellé sur le premier substrat 20, de sorte que la couche 31 de silicium monocristallin fortement dopée, identique à celle 21 du premier substrat 20, recouvre la cavité 1b qui a été structurée lors de la première étape.

Dans une quatrième étape, illustré à la figure 9, la couche 33 en silicium du deuxième substrat de SOI 30 est amincie, par exemple une gravure chimique avec du TMAH (Tetramethylammonium hydroxide). Puis la couche de dioxyde de silicium enterrée 32 est retirée par gravure chimique de sorte qu'il ne subsiste plus que la couche 31 de silicium fortement dopée.

Par ailleurs, l'ensemble 20-30 subit une lithographie et une gravure sèche de manière à délimiter les flancs 1c de l'oscillateur 1 (voir figure 10). D'autre part, une couche 40 de matériau isolant électrique est formée par oxydation thermique ou dépôt conforme ALD (Atomic Layer Déposition) d'un oxyde « high-k » (haute permittivité) de type Al₂0₃ ou HFO₂ sur les zones destinées à rentrer en contact avec le fluide, pour éviter l'apparition de courants de fuite en milieu aqueux.

Une résine est ensuite étalée sur cette face puis exposée à travers un masque pour graver localement, par photolithographie, ce dépôt de matériau isolant, afin de dégager ce dernier sur les futurs plots de contact électrique.

Après retrait de la résine, une couche de métal 41 est déposée en face avant de l'ensemble 20-30. Une résine est ensuite étalée sur cette face puis exposée à travers un masque pour y définir un moule qui servira à la définition des électrodes par électrolyse. Cette croissance électrolytique (à base d'Or préférentiellement) est suivie du retrait chimique de la résine, et de la couche de métal déposée au préalable.

Enfin, un capot 50, sous lequel est déposée une couche structurée 60 d'un matériau biocompatible, est déposé sur l'ensemble 20-30 de sorte à ménager une ouverture 61 au dessus de l'oscillateur 1. Le capot 50 est transparent, de préférence, en verre ou en Pyrex®. Il peut être usiné de façon à pouvoir réaliser des tests sous pointes et reprendre les contacts sur des plots de polarisation de l'oscillateur situés en périphérie de l'ensemble 20-30 et reliés électriquement à l'oscillateur via les moyen de support. La couche 60 est, de préférence, constituée d'un polymère biocompatible ou d'une couche en silicium hautement résistif.

Enfin, une ouverture 3 est gravée sous l'oscillateur 1, dans les couches 22 et 23, pour lui permettre d'entrer en vibration selon un mode vibratoire déterminé (figure 11).

Une méthode de détection gravimétrique de particules en milieu fluide selon l'invention consiste à mettre en œuvre l'oscillateur électromécanique décrit précédemment. Cette mise en oeuvre comprend les étapes suivantes :
(a) générer un flux de fluide pour amener du fluide au contact de l'oscillateur dans la cavité traversante 1b ;
b) mettre en vibration l'oscillateur 1 à une fréquence initiale et selon un mode vibratoire déterminé ;
c) détecter la fréquence de vibration de l'oscillateur 1 ;
d) détecter une modification de la fréquence par rapport à la fréquence de vibration initiale de l'oscillateur 1.

La mise en vibration de l'oscillateur à sa fréquence initiale peut être faite selon plusieurs modes vibratoires. Dans un mode préférentiel de réalisation de l'invention, pour lequel l'oscillateur serait constitué d'une plaque carrée, grâce à la disposition des électrodes en face de chaque bord de l'oscillateur et dans le même plan que la plaque, les modes vibratoires qui peuvent être utilisés, avec de bons résultats, sont le mode vibratoire de Lamé, le mode vibratoire d'extension volumique (ou mode dit de respiration), et le mode dit de « verre à vin » lorsque l'oscillateur est un disque ou un anneau circulaire.

De préférence, la fréquence de vibration initiale est une fréquence de résonance de l'oscillateur.

Selon le mode vibratoire de Lamé, les quatre coins de l'oscillateur et son centre constituent des noeuds de vibration (déplacement nul et perte d'énergie minimale). L'onde de cisaillement qui est associée à ce mode de vibration se propage selon les diagonales du carré, de sorte qu'au mode fondamental, les déformés de deux côtés consécutifs du carré sont déphasés de π l'un par rapport à l'autre. Il en résulte un mode isochore, ce qui permet une réduction significative des pertes thermo-élastiques à travers la structure mise en vibration, contrairement aux poutres encastrées (bi-encastrées ou en porte-à-faux) qui sont sollicitées en flexion. Autrement dit, le mode de Lamé permet une amélioration significative du facteur de qualité car les coins de la plaque carrée constituent les nœuds de vibration. Ils ne subissent, ainsi, quasiment aucune contrainte mécanique lors de la vibration, de sorte que cette vibration n'est pas dissipée au reste du dispositif. Toute la vibration est concentrée sur l'oscillateur de sorte que le moindre dépôt d'une molécule sur sa surface ou retrait d'une molécule de sa surface peut être détecté.

Pour obtenir une vibration de l'oscillateur selon le mode de Lamé, au moins une électrode disposée en face d'un bord de l'oscillateur est alimentée à l'aide d'un signal alternatif *vᵢₙ*, de fréquence de résonnance *fᵢₙ* correspondant au mode de Lamé attendu. L'oscillateur est polarisé par l'intermédiaire de l'un de ses moyens de support qui est alimenté par un signal de tension continue V_{DC} dont le rôle est d'agir sur l'amplitude de la force électrostatique de mise en vibration, et sur la valeur de la fréquence de résonance de l'oscillateur. Dans un mode préférentiel, pour faire vibrer l'oscillateur selon le mode de lamé, deux électrodes (2a et 2b par exemple), situées en face de deux bords consécutifs de la plaque, sont polarisées avec le même signal *vᵢₙ*, mais déphasé de π l'une par rapport à l'autre, tandis que l'oscillateur reste polarisé à l'aide du signal de tension continue V_{DC}.

La détection de la fréquence de vibration se fait préférentiellement par couplage capacitif par l'intermédiaire d'un courant *Iₒᵤₜ* généré par la modulation de la capacité de transduction entre l'oscillateur mis en vibration et au moins l'une des électrodes qui ne serait pas alimentée par le signal alternatif *vᵢₙ* (voir figure 12). Ainsi, le courant capacitif de sortie *Iₒᵤₜ* est mesuré au moins sur l'une des électrodes 2c ou 2d qui n'est pas commandée par le signal d'excitation *vᵢₙ*. Dans un mode préféré de l'invention, ce courant *Iₒᵤₜ* résulte de la somme de deux courants *Iₒᵤₜ₁* et *Iₒᵤₜ₂*, issus du couplage capacitif entre la plaque en mouvement et de deux électrodes adjacentes 2c ou 2d qui ne sont pas alimentées par le signal alternatif *vᵢₙ*. Le courant *Iₒᵤₜ₁* est inversé avant addition avec le courant *Iₒᵤₜ₂*.

Pour obtenir une vibration selon le mode d'extension volumique, au moins une électrode disposée en face d'un bord de l'oscillateur est alimentée par un signal alternatif *vᵢₙ* de fréquenc e de résonnance *fᵢₙ* correspondant au mode d'extension volumique attendu, se superposant à un signal de tension continue V_{DC} dont le rôle est d'agir sur l'amplitude de la force électrostatique de mise en vibration, et sur la valeur de la fréquence de résonance de l'oscillateur. Dans un mode préférentiel, pour exciter le mode d'extension volumique, on polarisera les quatre électrodes en face des bords de la plaque avec le même signal *vᵢₙ,* se superposant à un signal de tension continue V_{DC}. La détection de la fréquence de vibration se fait par l'intermédiaire d'un courant *Iₒᵤₜ* détecté au niveau de l'un des moyens de support 6 (voir figure 12).

Dans le mode vibratoire d'extension volumique, la forme de la plaque est conservée (carrée) et ses flancs vibrent en phase (dilatation et contraction) par opposition au mode de Lamé pour lequel deux côtés voisins vibrent en déphasage de π l'un par rapport à l'autre.

Ainsi, lorsque le fluide circule à l'intérieur du canal 4 et dans la cavité 1b, et que l'oscillateur vibre à sa fréquence de résonance, il est possible d'observer une variation de la fréquence de résonance lors du dépôt de particules sur les parois de la cavité 1b de l'oscillateur 1 ou, au contraire, lorsque des particules se sont détachées de ces parois et sont de nouveau en solution.

La méthode de détection gravimétrique selon l'invention comprend une étape e) de récupération et de traitement de données de détection générées aux étapes c) et d), ces données permettant de déduire, par exemple, la masse des particules qui se sont déposées sur l'oscillateur, ou qui se sont détachées de ce dernier et sont de nouveau dans le fluide.

Deux méthodes peuvent être utilisées pour améliorer la détection de particules avec le dispositif de détection selon l'invention. Ces méthodes peuvent être combinées entre elles.

Une première méthode consiste à recouvrir au moins partiellement la surface de la cavité 1b au sein de l'oscillateur avec des éléments de reconnaissance moléculaire. En présence de piliers au sein de la cavité traversante 1b, ces éléments pourront également recouvrir ces derniers. Les éléments se lient spécifiquement avec les molécules que l'on souhaite détecter et permettent une détection ciblée de ces molécules dans un fluide comportant des molécules de types différents.

Une deuxième méthode, illustrée en figure 12, est basée sur l'effet diélectrophorétique. Elle est permise par la configuration quadripolaire des électrodes du dispositif.

Ainsi, lorsque la mise en vibration de l'oscillateur prévue à l'étape b), est précédée d'une étape b1) dans laquelle au moins deux électrodes consécutives sont alimentées en champ sinusoïdal en opposition de phase et à une fréquence déterminée f caractéristique des particules à détecter, et ce pendant l'intervalle de temps [0 ; T_{S}], un phénomène de piégeage est obtenu en maintenant en "lévitation" les particules que l'on souhaite détecter au-dessus du fond 1a de la cavité 1b de l'oscillateur.

De préférence, deux électrodes en regard sont alimentées en champ sinusoïdal à une fréquence déterminée (f) caractéristique des particules à détecter, au même potentiel +V₀, les deux autres électrodes étant en opposition de phase, au potentiel -V₀ (configuration dite « à champ alterné »). Ce faisant, le phénomène de piégeage est obtenu au-dessus du centre du fond 1a de la cavité 1b de l'oscillateur.

L'étape b1) est préférentiellement précédée d'une étape b0) dans laquelle le flux de fluide dans le canal est arrêté. Cette étape b0) améliore ainsi le piégeage.

Ensuite, les électrodes sont alimentées pendant l'intervalle de temps [T_{S} ; 2T_{S}], de manière à faire vibrer l'oscillateur selon un mode vibratoire déterminé (mode de Lamé, mode d'extension volumique, mode du verre à vin s'il s'agit d'un disque ou anneau par exemple, ou autre). Durant cet intervalle, les molécules se déposent sur le fond 1a de la cavité 1b de l'oscillateur puisqu'elles ne sont plus ni entraînées par le fluide, ni maintenues en lévitation par l'effet diélectrophorétique.

La méthode de détection gravimétrique selon l'invention peut être utilisée pour déterminer une cinétique d'interaction entre une molécule et un élément de reconnaissance moléculaire complémentaire disposé sur une paroi quelconque de la cavité. Dans ce cas, la méthode consiste, dans une étape d), à détecter une première modification de fréquence de vibration de l'oscillateur lorsque la molécule se fixe sur l'élément de reconnaissance moléculaire disposé à la surface de la cavité de l'oscillateur, puis, dans une étape d'), à détecter une nouvelle modification de la fréquence, correspondant à un retour à la valeur de la fréquence de résonance de l'oscillateur, lorsque la molécule se détache de l'élément de reconnaissance moléculaire. Cette étape d') est réalisée après l'étape d) de la méthode de détection gravimétrique.

Cette méthode de détermination de cinétique d'interaction pourra être mise à profit dans le contexte de la dynamique moléculaire pour évaluer, par exemple, les constantes d'association/dissociation entre biomolécules très variées (protéines, DNA, RNA, polysaccharides, lipides, voire virus et cellules). Citons les interactions antigène-anticorps, anticorps-anticorps, hormone-récepteur, drogue-récepteur, enzyme-cofacteur/inhibiteur, protéine-ADN, protéine-ARN, ADN-ADN, lipoprotéine-enzyme, protéine-peptide, phages-anticorps, etc.

Le dispositif de détection gravimétrique selon l'invention peut permettre également le suivi de trajectoire de particules circulant au sein de la cavité traversante par le biais de la mesure en continu de la fréquence de vibration de l'oscillateur. En effet, outre la masse des particules d'intérêt, leur position au sein de la cavité ménagée dans l'oscillateur va influer sur le décalage de la fréquence de vibration de ce dernier (comme il expliqué en détails pour une poutre en porte-à-faux dans l'article de S. Manalis et al., "Weighing of biomolecules, single cells and single nanoparticles in fluid", Nature 446, Apr 26 2007, (7139): 1066-1069). Ce mode de fonctionnement implique qu'il n'y ait pas de capture d'objets d'intérêt sur les parois de l'oscillateur et donc il convient de ne pas greffer d'éléments de reconnaissance moléculaire dans la cavité de l'oscillateur.

Le dispositif de détection gravimétrique selon l'invention présente de nombreux avantages par rapport aux dispositifs de l'état de la technique constitué par des poutres encastrées (bi-encastrées ou en porte-à-faux).

Le dispositif de détection gravimétrique selon l'invention est plus sensible et plus efficace qu'une poutre équivalente munie d'une veine fluidique. Il permet également d'utiliser des techniques de structuration de taille supérieure et donc moins chères.

Par ailleurs, son encombrement est réduit car les moyens d'actionnement et de détection sont intégrés à l'oscillateur, en ce sens qu'ils sont réalisés dans le même substrat et le même plan que ce dernier. D'autre part, les techniques de fabrication utilisées sont compatibles avec une intégration de l'électronique de conditionnement (amplificateur trans-impédance, déphaseur ...) et de mise en forme du signal au voisinage de l'oscillateur.

La structure de l'oscillateur selon l'invention permet une détection gravimétrique de particules dont la masse minimale détectable est d'environ trente deux fois plus faible que celle détectée à l'aide des dispositifs de l'état de la technique sous forme de poutre munie d'une veine fluidique.

En outre, la mise en œuvre du dispositif selon l'invention peut être faite *in vivo* et ne nécessite pas un dépôt précis des particules sur l'oscillateur. Dans ce cas, le dispositif peut être implanté chez l'homme ou l'animal et les données sont émises par ondes radio vers un serveur externe.

D'autre part, le fait de faire circuler le fluide à l'intérieur de l'oscillateur permet de s'affranchir des forces hydrodynamiques et optimise la sensibilité du capteur. Son coefficient de qualité est également amélioré par rapport à un oscillateur sous forme d'une plaque vibrant entre deux canaux fluidiques, car ce dernier déplace une quantité de liquide supérieure à celle déplacée par un dispositif selon l'invention.

Enfin, l'oscillateur selon l'invention ne nécessite aucune étape de calibrage, contrairement au dispositif de TEVA.

Selon d'autres modes de réalisation, l'oscillateur peut être un polygone et les moyens de support disposés à au moins un sommet de l'oscillateur.

## Revendications

1. Dispositif pour la détection gravimétrique de particules en milieu fluide, ledit dispositif étant muni d'une entrée (E) de fluide et d'une sortie (S) de fluide et comprenant :
- un canal (4) pour le passage du fluide ;
- un oscillateur électromécanique (1) comportant un fond (1a) et des flancs (1c), lesdits flancs définissant une cavité (1b) ménagée dans ledit oscillateur électromécanique ;
- des moyens de support (6, 7) de l'oscillateur électromécanique ; et
- des moyens d'actionnement (2a, 2b, 2c, 2d) dudit oscillateur électromécanique, lesdits moyens étant agencés pour assurer la vibration de l'oscillateur (1)
**caractérisé en ce que** :- le canal (4) pour le passage du fluide est , agencé pour être en communication fluidique avec la cavité (1b), traversante, de sorte que le fluide puisse entrer dans le dispositif par l'entrée (E) de fluide, traverser la cavité traversante (1b) et sortir du dispositif par la sortie (S) de fluide ;
- l'oscillateur électromécanique (1) est de forme carrée et plan, c'est-à-dire formé d'une plaque présentant une largeur et une épaisseur données, ladite largeur étant au moins deux fois supérieure à ladite épaisseur,
- les moyens de support (6, 7) sont disposés aux quatre sommets de l'oscillateur électromécanique, et
- les moyens d'actionnement (2a, 2b, 2c, 2d) se présentent sous la forme d'électrodes disposées dans le même plan que l'oscillateur électromécanique, à savoir que chaque électrode est en regard d'un flanc de l'oscillateur électromécanique à une distance (g) déterminée, parallèle à son fond et sensiblement de même épaisseur, de sorte que lesdits moyens assurent la vibration de l'oscillateur électromécanique (1) dans son plan.

2. Dispositif selon la revendication 1, dans lequel les moyens de support (6, 7) se présentent sous la forme de pièces massives, telles que des pavés (6).

3. Dispositif selon l'une quelconque des revendications précédentes, dans lequel à chaque sommet de l'oscillateur électromécanique (1), les moyens de support (6, 7) comprennent une fourche (10) comprenant un manche (11) et deux dents (12), orientés dans le prolongement d'une diagonale de l'oscillateur électromécanique passant par ledit sommet, les dents étant reliées à une pièce massive (13).

4. Dispositif selon l'une quelconque des revendications précédentes, dans lequel à chaque sommet de l'oscillateur électromécanique, les moyens de support (6, 7) comprennent une poutre orientée dans le prolongement d'une diagonale de l'oscillateur électromécanique passant par ledit sommet, la poutre étant reliée à une pièce massive.

5. Dispositif selon l'une quelconque des revendications précédentes, dans lequel ledit oscillateur électromécanique est obtenu à partir d'un substrat métallique.

6. Dispositif selon l'une des revendications précédentes, dans lequel ledit oscillateur électromécanique est obtenu à partir d'un substrat polycristallin.

7. Dispositif selon l'une des revendications précédentes, dans lequel ledit oscillateur électromécanique (1) est obtenu à partir d'un substrat monocristallin.

8. Dispositif selon l'une quelconque des revendications 6 ou 7, dans lequel le substrat est à base de silicium.

9. Dispositif selon la revendication 7, dans lequel ledit substrat monocristallin est orienté selon le plan cristallographique (100) ou, alternativement, selon le plan cristallographique (110).

10. Dispositif selon les revendications précédentes, dans lequel ladite cavité traversante (1b) de l'oscillateur électromécanique est au moins partiellement recouverte par des éléments de reconnaissance moléculaire.

11. Dispositif selon l'une quelconque des revendications 1 à 9, dans lequel ladite cavité traversante (1b) de l'oscillateur électromécanique et/ou le canal (4) contient des piliers dont la section transversale est de forme prise parmi un cercle, une ellipse, et un polygone.

12. Méthode de détection gravimétrique de particules en milieu fluide, mise en œuvre avec un dispositif selon l'une des revendications précédentes, ladite méthode comprenant les étapes suivantes :
a) générer un flux de fluide pour amener du fluide au contact de l'oscillateur; dans la cavité traversante,
b) mettre en vibration l'oscillateur à une fréquence initiale et selon un mode vibratoire déterminé, ledit mode vibratoire étant pris dans le groupe constitué par le mode vibratoire de Lamé et le mode vibratoire d'extension volumique ;
c) détecter la fréquence de vibration de l'oscillateur;
d) détecter une modification de la fréquence par rapport à la fréquence de vibration initiale de l'oscillateur.

13. Méthode de détection gravimétrique selon la revendication précédente, comprenant une étape e) de récupération et de traitement de données de détection générées aux étapes c) et d).

14. Méthode de détection gravimétrique selon l'une quelconque des revendications 12 ou 13, dans laquelle la fréquence de vibration initiale est une fréquence de résonance de l'oscillateur.

15. Méthode de détection gravimétrique selon l'une quelconque des revendications 12 à 14 dans laquelle la mise en vibration de l'oscillateur prévue à l'étape b), est précédée d'une étape b1) dans laquelle au moins deux électrodes consécutives sont alimentées en champ sinusoïdal en opposition de phase et à une fréquence déterminée (f) caractéristique des particules à détecter.

16. Méthode de détection gravimétrique selon la revendication 15, dans laquelle l'étape b1) est précédée d'une étape b0) dans laquelle le flux de fluide est arrêté.

17. Méthode de détection gravimétrique selon l'une des revendications 12 à 16, comprenant une étape a0) préalable à l'étape a), dans laquelle la surface de la cavité dudit oscillateur est recouverte au moins partiellement par des éléments de reconnaissance moléculaire.

18. Méthode de détermination de cinétique d'interaction entre une molécule et un élément de reconnaissance moléculaire complémentaire, utilisant la méthode de détection gravimétrique selon l'une des revendications 12 à 17, et comprenant une étape d') de détection d'une nouvelle modification de la fréquence correspondant à un retour à la valeur de la fréquence de résonance de l'oscillateur, cette étape d') étant réalisée après l'étape d).

## Patentansprüche

1. Vorrichtung zur gravimetrischen Detektion von Teilchen in einem Fluidmedium, wobei die Vorrichtung mit einem Fluideinlass (E) und einem Fluidauslass (S) versehen ist und Folgendes umfasst:
- einen Kanal (4) für den Durchgang des Fluids;
- einen elektromechanischen Oszillator (1), einen Boden (1a) und Flanken (1c) beinhaltend, wobei die Flanken einen Hohlraum (1b) definieren, der in dem elektromechanischen Oszillator ausgebildet ist;
- Stützmittel (6, 7) des elektromechanischen Oszillators; und
- Betätigungsmittel (2a, 2b, 2c, 2d) des elektromechanischen Oszillators, wobei die Mittel angeordnet sind, um für die Vibration des Oszillators (1) zu sorgen
**dadurch gekennzeichnet, dass**: - der Kanal (4) für den Durchgang des Fluids angeordnet ist, um in Fluidkommunikation mit dem durchquerenden Hohlraum (1b) zu stehen, sodass das Fluid durch den Fluideinlass (E) in die Vorrichtung eintreten, den durchquerenden Hohlraum (1b) durchqueren und aus der Vorrichtung durch den Fluidauslass (S) austreten kann;
- der elektromechanische Oszillator (1) von quadratischer Form und eben ist, das heißt aus einer Platte gebildet, die eine gegebene Breite und eine Dicke aufweist, wobei die Breite mindestens zwei Mal größer als die Dicke ist,
- die Stützmittel (6, 7) an vier Scheitelpunkten des elektromechanischen Oszillators angebracht sind, und
- die Betätigungsmittel (2a, 2b, 2c, 2d) in der Form von in der gleichen Ebene wie der elektromechanische Oszillator angebrachten Elektroden vorliegen, und zwar so, dass jede Elektrode einer Flanke des elektromechanischen Oszillators in einem bestimmten Abstand (g) zugewandt, parallel zu seinem Boden und im Wesentlichen von gleicher Dicke ist, sodass die Mittel für die Vibration des elektromechanischen Oszillators (1) in seiner Ebene sorgen.

2. Vorrichtung nach Anspruch 1, wobei die Stützmittel (6, 7) in der Form massiver Teile, wie Pflastersteine (6), vorliegen.

3. Vorrichtung nach einem der vorstehenden Ansprüche, wobei an jedem Scheitelpunkt des elektromechanischen Oszillators (1) die Stützmittel (6, 7) eine Gabelung (10) umfassen, einen Schaft (11) und zwei Zinken (12) umfassend, die in der Verlängerung einer Diagonale des elektromechanischen Oszillators, die durch den Scheitelpunkt hindurchgeht, orientiert sind, wobei die Zinken mit einem massiven Teil (13) verbunden sind.

4. Vorrichtung nach einem der vorstehenden Ansprüche, wobei an jedem Scheitelpunkt des elektromechanischen Oszillators die Stützmittel (6, 7) einen Balken umfassen, die in der Verlängerung einer Diagonale des elektromechanischen Oszillators, die durch den Scheitelpunkt hindurchgeht, orientiert ist, wobei der Balken mit einem massiven Teil verbunden ist.

5. Vorrichtung nach einem der vorstehenden Ansprüche, wobei der elektromechanische Oszillator ausgehend von einem metallischen Substrat erhalten wird.

6. Vorrichtung nach einem der vorstehenden Ansprüche, wobei der elektromechanische Oszillator ausgehend von einem polykristallinen Substrat erhalten wird.

7. Vorrichtung nach einem der vorstehenden Ansprüche, wobei der elektromechanische Oszillator (1) ausgehend von einem monokristallinen Substrat erhalten wird.

8. Vorrichtung nach einem der Ansprüche 6 oder 7, wobei das Substrat auf Silicium basiert.

9. Vorrichtung nach Anspruch 7, wobei das monokristalline Substrat entlang der kristallographischen Ebene (100) oder alternativ dazu, entlang der kristallographischen Ebene (110) orientiert ist.

10. Vorrichtung nach einem der vorstehenden Ansprüche, wobei der durchquerende Hohlraum (1b) des elektromechanischen Oszillators mindestens teilweise durch Elemente zur molekularen Erkennung bedeckt ist.

11. Vorrichtung nach einem der Ansprüche 1 bis 9, wobei der durchquerende Hohlraum (1b) des elektromechanischen Oszillators und/oder der Kanal (4) Pfeiler enthält, von denen der Querschnitt von einer aus einem Kreis, einer Ellipse und einem Polygon genommenen Form ist.

12. Verfahren zur gravimetrischen Detektion von Teilchen in einem Fluidmedium, ausgeführt mit einer Vorrichtung nach einem der vorstehenden Ansprüche, wobei das Verfahren die folgenden Schritte umfasst:
a) Erzeugen einer Fluidströmung, um Fluid in Kontakt mit dem Oszillator zu bringen; in dem durchquerenden Hohlraum,
b) Zum-Vibrieren-bringen des Oszillators bei einer Anfangsfrequenz und gemäß eines bestimmten Vibrationsmodus, wobei der Vibrationsmodus aus der Gruppe, bestehend aus dem Lame-Vibrationsmodus und dem Vibrationsmodus mit Volumenausdehnung genommen wird;
c) Detektieren der Vibrationsfrequenz des Oszillators;
d) Detektieren einer Änderung der Frequenz bezogen auf die anfängliche Vibrationsfrequenz des Oszillators.

13. Verfahren zur gravimetrischen Detektion nach dem vorstehenden Anspruch, umfassend einen Schritt e) der Gewinnung und der Behandlung der in den Schritten c) und d) erzeugten Detektionsdaten.

14. Verfahren zur gravimetrischen Detektion nach einem der Ansprüche 12 oder 13, wobei die anfängliche Vibrationsfrequenz eine Resonanzfrequenz des Oszillators ist.

15. Verfahren zur gravimetrischen Detektion nach einem der Ansprüche 12 bis 14, wobei dem in dem Schritt b) vorgesehenen Zum-Vibrieren-bringen des Oszillators ein Schritt b1) vorausgeht, in dem mindestens zwei aufeinander folgende Elektroden mit einem sinusförmigen Feld in Phasenopposition und einer bestimmten Frequenz (f), kennzeichnend für die zu detektierenden Teilchen, versorgt werden.

16. Verfahren zur gravimetrischen Detektion nach Anspruch 15, wobei dem Schritt b1) ein Schritt b0) vorausgeht, wobei die Fluidströmung angehalten wird.

17. Verfahren zur gravimetrischen Detektion nach einem der Ansprüche 12 bis 16, umfassend einen dem Schritt a) vorausgehenden Schritt a0), wobei die Oberfläche des Hohlraums des Oszillators mindestens teilweise durch Elemente zur molekularen Erkennung bedeckt wird.

18. Verfahren zur Bestimmung von kinetischer Wechselwirkung zwischen einem Molekül und einem komplementären Element zur molekularer Erkennung, durch Verwenden des Verfahrens zur gravimetrischen Detektion nach einem der Ansprüche 12 bis 17 und umfassend einen Schritt d') des Detektierens einer neuen Änderung der Frequenz, entsprechend einer Rückkehr zum Wert der Resonanzfrequenz des Oszillators, wobei dieser Schritt d') nach dem Schritt d) durchgeführt wird.

## Claims

1. Device for the gravimetric detection of particles in a fluid medium, said device being provided with a fluid inlet (E) and a fluid outlet (S) and comprising:
- a channel (4) for the passage of the fluid;
- an electromechanical oscillator (1) comprising a bottom (1a) and sides (1c), said sides defining a cavity (1b) provided in said electromechanical oscillator;
- means (6, 7) for supporting the electromechanical oscillator; and
- means (2a, 2b, 2c, 2d) for actuating said electromechanical oscillator, said means being arranged to ensure that the oscillator (1) vibrates,
**characterised in that**:
- the channel (4) for the passage of the fluid is arranged to be in fluid communication with the through-cavity (1b), so that the fluid can enter the device through the fluid inlet (E), pass through the through-cavity (1b) and exit the device through the fluid outlet (S);
- the electromechanical oscillator (1) is square and flat, i.e. formed of a plate with a given width and thickness, said width being at least twice as big as said thickness,
- the support means (6, 7) are arranged at the four summits of the electromechanical oscillator, and
- the actuating means (2a, 2b, 2c, 2d) are in the form of electrodes arranged in the same plane as the electromechanical oscillator, i.e. each electrode faces a side of the electromechanical oscillator at a given distance (g), parallel to its bottom and with substantially the same thickness, so that said means ensure that the electromechanical oscillator (1) vibrates in its plane.

2. Device according to claim 1, wherein the support means (6, 7) are in the form of solid parts, such as blocks (6).

3. Device according to any one of the preceding claims, wherein at each summit of the electromechanical oscillator (1), the support means (6, 7) comprise a pitchfork (10) comprising a handle (11) and two prongs (12) oriented along the extension of a diagonal line of the electromechanical oscillator intersecting with said summit, the prongs being connected to a solid part (13).

4. Device according to any one of the preceding claims, wherein at each summit of the electromechanical oscillator, the support means (6, 7) comprise a beam oriented along the extension of a diagonal line of the electromechanical oscillator intersecting with said summit, the beam being connected to a solid part.

5. Device according to any one of the preceding claims, wherein said electromechanical oscillator is obtained from a metallic substrate.

6. Device according to one of the preceding claims, wherein said electromechanical oscillator is obtained from a polycrystalline substrate.

7. Device according to one of the preceding claims, wherein said electromechanical oscillator (1) is obtained from a monocrystalline substrate.

8. Device according to any one of claims 6 or 7, wherein said substrate is silicon-based.

9. Device according to claim 7, wherein said monocrystalline substrate is oriented along the crystallographic plane (100) or, alternatively, according the crystallographic plane (110).

10. Device according to the preceding claims, wherein said through-cavity (1b) of the electromechanical oscillator is at least partially covered with molecular recognition elements.

11. Device according to any one of claims 1 to 9, wherein said through-cavity (1b) of the electromechanical oscillator and/or the channel (4) comprises columns, the transversal cross-section of which has a shape selected from among a circle, an ellipse, and a polygon.

12. Method for the gravimetric detection of particles in a fluid medium, implemented with a device according to one of the preceding claims, said method comprising the following steps:
a) generating a fluid stream to bring the fluid into contact with the oscillator, in the through-cavity,
b) vibrating the oscillator at an initial frequency and according to a determined vibration mode, said vibration mode being selected from the group made of the Lame vibration mode and the volume extension vibration mode;
c) detecting the vibration frequency of the oscillator;
d) detecting a change in the frequency with respect to the initial vibration frequency of the oscillator.

13. Gravimetric detection method according to the preceding claim, comprising a step e) of collecting and processing the detection data generated in steps c) and d).

14. Gravimetric detection method according to any one of claims 12 or 13, wherein the initial vibration frequency is a resonance frequency of the oscillator.

15. Gravimetric detection method according to any one of claims 12 to 14, wherein the vibration of the oscillator of step b) comes after a step b1) wherein at least two consecutive electrodes are powered in a sinusoidal field with phase opposition and at a determined frequency (f) specific to the particles that are to be detected.

16. Gravimetric detection method according to claim 15, wherein the step b1) comes after a step b0) wherein the fluid stream is stopped.

17. Gravimetric detection method according to one of the claims 12 to 16, comprising a step a0) prior to step a), wherein the surface of the cavity of said oscillator is at least partially covered with molecular recognition elements.

18. Method for determining the interaction kinetic between a molecule and a complementary molecular recognition element using the gravimetric detection method according to one of the claims 12 to 17, and comprising a step d') for detecting a new change of the frequency corresponding to a return to the resonance frequency value of the oscillator, this step d') being performed after the step d).
